# EUROPEAN PATENT APPLICATION

(11) **EP 3 246 600 A1**
(43) Date of publication of application: **22.11.2017**
(21) Application number: 17168126.5
(22) Date of filing: 26.04.2017
(51) Int. Cl.: F16H 59/10, F16H 61/22, F16H 59/02

(54) **TRANSMISSION SHIFTER WITH MULTI-POSITION LOCKOUT**

(30) Priority: 17.05.2016 US 201615156864
(71) Applicant: Dura Operating, LLC, Auburn Hills, MI 48326 (US)
(72) Inventor: ABU-SOUD, Sami H., Royal Oak, MI 48067 (US); BEATTIE, Dale A., Norton Shores, MI 49441 (US)
(74) Representative: Albrecht, Ralf

(57) **Abstract**

A shifter (10) for a transmission includes a shift member (12), a lock member (36) and an actuator (40). The shift member (12) is movable among at least a first and second positions corresponding to first and second transmission gears. The lock member (36) is movable between first and second lock positions. The actuator (40) has a first position when not actuated and a second position when actuated, and the actuator (40) is coupled to the lock member (36) to move the lock member (36) relative to the shift member (12). When the shift member (12) and actuator (40) are in their first positions, the lock member (36) is in its first lock position movement of the shift member (12) out of the first position is prevented. When the shift member (12) and actuator (40) are in their second positions the lock member (36) is in its second lock position and movement of the shift member (12) out of the second position is prevented.

## Description

### Technical Field

The present disclosure relates to a vehicle transmission shifter that may be selectively prevented from movement in multiple positions.

### Background

In some vehicles, a gear shift lever in a passenger compartment of the vehicle can be moved by an operator of the vehicle to shift the vehicle transmission between its park gear and other gears, such as reverse, neutral and forward drive gears. The shift lever is mechanically coupled to the transmission through a cable that transmits the shift lever movement to a transmission shift mechanism. It may be desirable, in at least some circumstances, to selectively prevent movement of the shift lever to prevent shifting the transmission at least until certain conditions are satisfied. For example, to shift the transmission out of park, a vehicle brake may need to be depressed or some other driver action may be needed.

### Summary

In at least some implementations, a shifter for a vehicle transmission includes a shift member, a lock member and an actuator. The shift member is movable among at least a first position corresponding to a first transmission gear and a second position corresponding to a second transmission gear. The lock member is movable between a first lock position and a second lock position. The actuator has a first position when not actuated and a second position when actuated, and the actuator is coupled to the lock member to move the lock member relative to the shift member. When the shift member is in a first position, the actuator is in its first position which moves the lock member to its first lock position wherein the lock member prevents movement of the shift member out of the first position. And when the shift member is in a second position and the actuator is actuated, the actuator is moved to the second position which moves the lock member into the second lock position wherein the lock member prevents movement of the shift member out of the second position. Hence, the shifter may provide lockouts of the shift member in at least two positions.

In at least some implementations, a shifter for a vehicle transmission includes a shift member, a lock member and an actuator. The shift member is movable among at least a first position, a second position and a third position to shift the transmission among at least a park gear, a neutral gear and a drive gear. The lock member is movable between a first lock position, an intermediate position and a second lock position. The actuator may be electrically actuated and have a first state when not actuated and a second state when actuated. The actuator is coupled to the lock member to move the lock member relative to the shift member. When the shift member is in the first position and the actuator is in the first state, the lock member is in the first lock position wherein the lock member prevents movement of the shift member out of the first position. When the shift member is in the second position and the actuator is in the second state, the lock member is moved into the second lock position wherein the lock member prevents movement of the shift member out of the second position. And when the shift member is in the third position and the actuator is in the first state, the lock member is in the intermediate position and movement of the shift member is permitted.

Other embodiments can be derived from combinations of the above and those from the embodiments shown in the drawings and the descriptions that follow.

### Brief Description of the Drawings

The following detailed description of preferred implementations and best mode will be set forth with regard to the accompanying drawings, in which:
FIG. 1 is a perspective view of a vehicle transmission shifter;
FIG. 2 is a side view of a portion of the shifter, showing a multi-position lockout in a first position;
FIG. 3 is a side view of a portion of the shifter, showing the multi-position lockout in a second position; and
FIG. 4 is a side view of a portion of the shifter, showing the multi-position lockout in a third position.

### Detailed Description

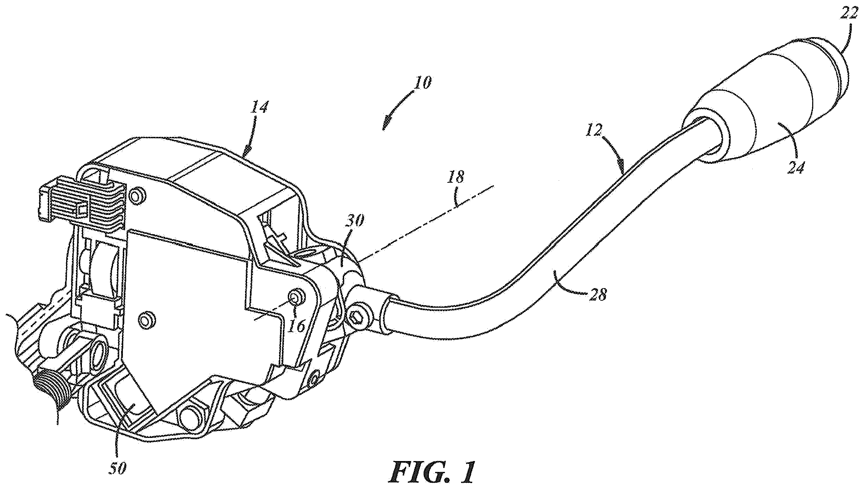

Referring in more detail to the drawings, FIG. 1 illustrates a vehicle transmission shifter 10 that includes a shift member 12 or lever that may be moved by a driver among multiple positions to cause a vehicle transmission to shift among various gears, often including park, neutral, reverse and one or more forward or drive gears. The shifter 10 may be mounted to a vehicle instrument panel or dashboard adjacent to a steering assembly or to the steering assembly (e.g. column mounted) or at a location spaced from the instrument panel or dashboard (e.g. in a center console between two vehicle seats).

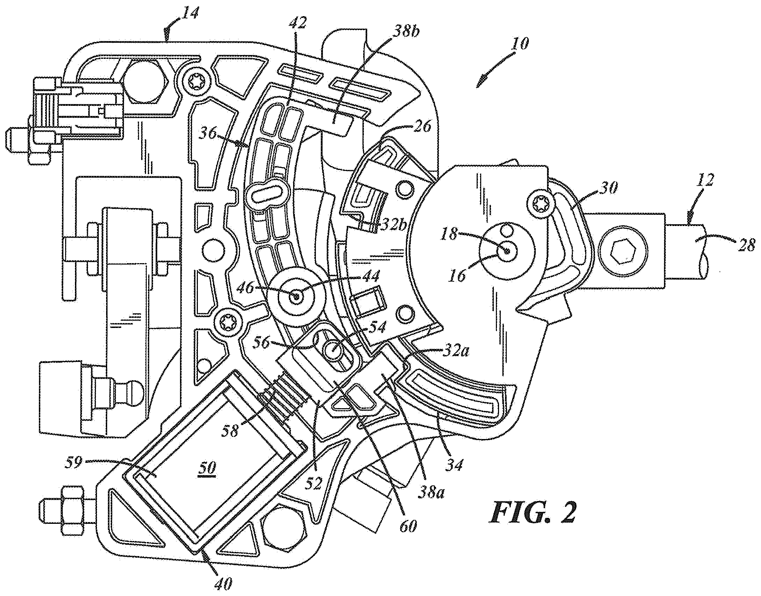

The shifter 10 includes a housing 14 or mounting bracket adapted to be fixed to the vehicle. The shift member 12 is coupled to the housing 14 at a pivot 16 so that the shift member may rotate or pivot about a first axis 18 relative to the housing between multiple positions that correspond to the various transmission gears or positions. The pivot 16 may include or be defined by a pin or shaft coupled to the housing 14. The shift member 12 may have a first end 22 spaced from the housing 14 and adapted to receive or carry a handle 24 that, in use, is manually gripped to facilitate pivoting changing the position of the shift member. And the shift member 12 may have a second end 26 (FIGS. 2-4), where the second end is on the opposite side of the pivot 16 from the first end 22. That is, the shift member 12 is pivoted between its ends 22, 26. In at least some implementations, the second end 26 is received within the housing 14 and, in assembly of the vehicle, is hidden behind an interior trim piece, such as a dashboard or instrument panel covering.

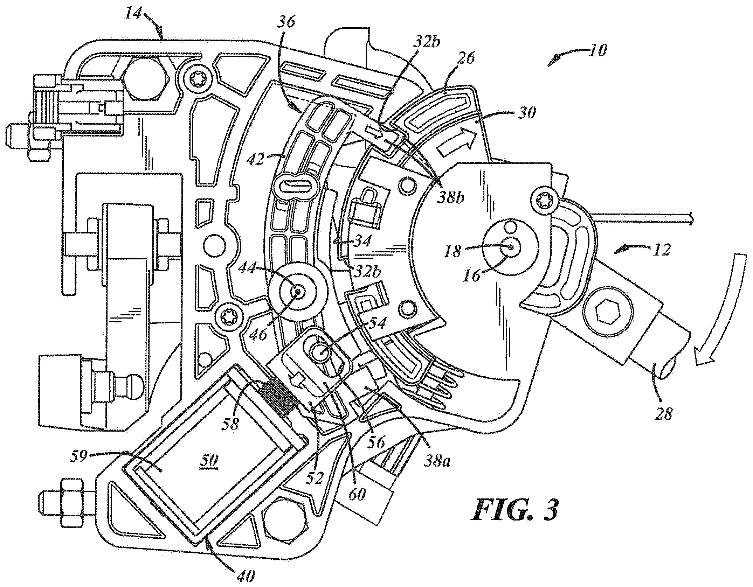

The shift member 12 may be formed in one piece, or multiple pieces, as desired. In the implementation shown, the shift member 12 includes an elongated rod 28 coupled to a base 30, where the base 30 is coupled to the pivot 16 and extends beyond the pivot to define the second end 26 of the shift member. As best shown in FIGS. 3-5, the base 30 may include or be coupled to other features of the shifter 10. As shown in FIGS. 2-4, the base 30 may include one or more control features 32a,b, with two shown in the illustrated embodiment. In the illustrated embodiment, the control features 32a,b include voids or recesses extending into the base 30 from a peripheral surface 34 of the base, and circumferentially spaced apart (relative to the shift member pivot axis 18). The recesses are arranged to be selectively engaged by a lock member 36 to selectively inhibit or prevent movement of the shift lever, as will be set forth in more detail below. As such, the control features 32a,b may include features other than recesses, such as one or more protrusions (e.g. tabs, teeth or the like) or other discontinuity of the base 30 that may be engaged by the a lock member 36 as generally set forth below.

To selectively engage the shift member control features 32a,b, the lock member 36 includes one or more control features 38a,b (two are shown), and an actuator 40 coupled to the lock member 36 to move the lock member relative to the base 30. In at least some implementations, the lock member 36 is separate from the base 30 and does not move with the base. The lock member 36 may include a body 42 that is coupled to the housing 14 or another structure for movement relative to the housing and relative to the base 30. In the implementation shown, the body 42 is connected to the housing 14 at a pivot 44, so that the body 42 pivots about a pivot axis 46 relative to the housing 14, and relative to the base 30. The control features 38a,b are carried by the body 42 at a location spaced from the pivot axis 46 so that the control features are moved toward or away from the base 30 as the lock member 36 is pivoted by the actuator 40. Of course, the lock member 36 may be slidably moved relative to the base 30 in addition to or in combination with the pivoted movement, or otherwise moved as desired to achieve one or more of the operation(s) or functions noted herein.

In the implementation shown, the lock member control features include protrusions, such as tabs 38a,b, extending toward the base. The tabs 38a,b are sized and arranged to be selectively received within one or more of the recesses 32a,b in the shift member base 30, and when a tab 38a or 38b is received in a recess 32a or 32b, the tab interferes with movement of the shift member 12 about its pivot 16 to inhibit or prevent shifting of the shift member until the tab is removed from the recess. Movement of the lock member 36 and hence, the tabs 38a,b, relative to the base 30 is controlled by the actuator 40.

The actuator 40 may be any suitable device capable of moving the lock member 36 relative to the shift member 12. In at least some implementations, the actuator 40 is electrically driven and is responsive to a control signal provided by a vehicle control unit or module. The actuator 40 may be in a first state and have a first position when not actuated by the control signal and be in a second state and have a second position when actuated by the control signal. As will be described in more detail below, the actuator may also have a third position that is between the first position and the second position, when in the first state (not actuated) as controlled by engagement of the lock member with the shift member. Hence, the actuator may achieve more than two positions in two states (e.g. actuated and not actuated).

In the example shown, the actuator 40 includes a solenoid 50 that drives an armature 52 that is coupled to or otherwise associated with the lock member 36 to move the lock member as a result of the armature movement. While any suitable coupling arrangement may be provided between the armature 52 and the lock member 36, in the example shown the lock member 36 includes a peg 54 and the armature 52 includes an opening 56 near one end in which the peg is received. The peg 54 is spaced from the pivot axis 46 so that movement of the armature 52 pivots the lock member 36 about the pivot axis. A biasing member 58 may act on the armature 52 to define the position of the armature when the solenoid 50 is not actuated. In the example shown, the biasing member is a spring 58 received between a housing 59 of the solenoid 50 and a head 60 of the armature 52.

When the solenoid 50 is not actuated (e.g. power is not provided to the solenoid), the spring 58 moves the armature 52 to its first position, which may also be called an extended position in this embodiment because the spring biases the armature 52 outwardly from the solenoid housing 59. In the orientation shown in FIGS. 2-4, this tends to rotate the lock member 36 counter-clockwise about the pivot axis 46. When the solenoid 50 is actuated, the solenoid provides a force on the armature 52 that retracts the armature further into the solenoid housing 59 (moving the head 60 toward the solenoid housing 59) against the force of the spring 58 to a second or retracted position. In the orientation shown in FIGS. 2-4, this tends to rotate the lock member 36 clockwise about the pivot axis 46.

When the shift member 12 is in a first position, the vehicle transmission is in first gear, which is park in the illustrated example. In this position of the shift member 12, the first recess 32a of the shift member 12 is aligned with the first tab 38a of the lock member 36. When the solenoid 50 is not actuated, the armature 52 is in its extended position and the first tab 32a (under the force of the spring 58) is received in the first recess 38a. This defines a first position of the actuator 40 and armature 52. In this position, the shift member 12 cannot be rotated and the transmission cannot be shifted out of park (at least not via movement of the shift member in the usual manner of shifting the transmission). Thus, the lock member 36 can provide a park lockout setting as noted. This may be desirable to maintain the transmission in park until certain things occur or certain conditions are met, for example, until a brake pedal of the vehicle is depressed. In this way, when the transmission is shifted out of park, movement of the vehicle is inhibited or prevented by the vehicle brake. Of course, the park lockout setting may be used for other reasons in addition to or instead of that described above. When it is desired to release the lock member 36 from the shift member 12, the actuator is moved to its second position. This may be done in the illustrated example by actuating the solenoid 50 to drive the armature 52 to its retracted position. This rotates the lock member 36 clockwise about the pivot axis 46 and the first tab 38a is thereby removed from the first recess 32a.

When the shift member in a second position, the transmission is in a gear other than park (e.g. reverse or drive). In this position of the shift member 12, the first recess 32a is not aligned with the first tab 38a. When the solenoid 50 is not actuated, the spring 58 displaces the armature 52 toward its extended position, and the first tab 38a engages a portion of the peripheral surface 34 of the shift member base 30 that is spaced from the first recess 32a. The engagement of the first tab 38a with the surface 34 may prevent the armature 52 from fully reaching its extended position, and thus, the actuator 40 is maintained in a third or intermediate position, with the armature 52 between the extended and retracted positions. In this state, if the shift member is again moved to its first position to shift the transmission to park, the lock member 36 will be rotated counter-clockwise about the pivot axis 46, under force of the spring 58, as the first tab 38a enters the first recess 32a when the first recess 32a becomes aligned with the first tab 38a. Hence, the park lockout may be achieved automatically, if desired, without separate actuation of the actuator 40 and as soon as the transmission is shifted into park.

In some applications, it may be desirable to lockout the shift member 12 in positions other than when the transmission is in park. For example, if the shift member is in a third position, which corresponds to the transmission being in a neutral gear, and this position is maintained for longer than a threshold period of time, it may be desirable to releasably lock the shift member 12 in its third position at least until one or more events occur. As in the park lockout, the neutral lockout may be maintained until one or more conditions are met, for example, the vehicle brake is depressed or otherwise actuated to ensure that a driver has control of the vehicle when the transmission is shifted out of neutral and into a drive gear (forward or reverse).

To effect a neutral lockout, the shift member 12 is arranged so that the second recess 32b of the shift member is aligned with the second tab 38b of the lock member 36 when the shift member is in its third position (e.g. the transmission is in neutral), as shown in FIG. 3. In normal vehicle operation, the solenoid 50 will not be actuated so the armature 52 will be extended by the spring 58, which tends to rotate the lock member 36 counter-clockwise about the pivot axis 46, and the first tab 38a engages the shift member 12. In this position, the armature 52 and lock member 36 are in their intermediate positions. When the vehicle transmission remains in neutral for a threshold period of time or longer, the actuator may be moved to its second position (e.g. by providing power to or actuating the solenoid 50). This retracts the armature 52 which rotates the lock member 36 clockwise and inserts the second tab 38b into the second recess 32b, as shown in FIG. 3. In this position, movement of the shift member is inhibited or prevented by interference between the shift member 12 and the lock member 36.

To terminate the neutral lockout, power to the solenoid 50 is terminated and the spring 58 displaces the armature 52 toward its extended position. This rotates the lock member 36 counter-clockwise, removes the second tab 38b from the second recess 32b, and engages the first tab 38a with the shift member base 30 at a location spaced from either recess 32a,b so that the shift member 12 may be moved relative to the lock member 36 to shift the vehicle transmission out of neutral. As noted above, the solenoid 50 may be deactivated when certain conditions are satisfied, which conditions may be chosen by a vehicle manufacturer for desired control of transmission shifting.

Hence, in at least some implementations, the lock member 36 is rotated in a first direction to engage a first tab 38a with the shift member 12 and in a second direction to engage a second tab 38b with the shift member 12, and in both positions the shift member is inhibited or prevented from movement. Further, the arrangement of the solenoid 50 and shift member 12 permits more than two positions of the solenoid with use of a solenoid having two modes, for example, activated and deactivated. In the example shown, one or more intermediate positions of the solenoid 50 and lock member 36 are achieved by interference between the components that occurs when the armature 52 is between its extended and retracted positions.

Other implementations are possible. For example, the shift member 12 may have one recess instead of two. The single recess could be aligned with a first tab 38a when the vehicle transmission is in a first gear (e.g. park) and with a second tab 38b when the vehicle transmission is in a second gear (e.g. neutral). The solenoid 50 may be actuated in a suitable manner to achieve two lockout positions, for example, by rotating the lock member 36 in one direction to achieve a first lockout position and in a second direction to achieve a second lockout position. Further, while the solenoid 50 is described above as being a single acting solenoid that moves the armature a first direction when activated and uses a spring to drive the armature 52 in a second direction when not activated, the solenoid 50 could be a double acting solenoid wherein the solenoid is activated a first time to retract the armature and is activated again to extend the armature. Further, while the examples noted include shifting lockout when the vehicle transmission is in a gear not associated with power transmission to the vehicle wheels (e.g. park and neutral) and wherein the lockout is removed to permit shifting to a gear associated with power transmission to the vehicle wheels (e.g. reverse or drive), the shift lockout may be used in other situations, as desired. The alternatives noted herein are not intended to be an exhaustive list; other options exist and may be utilized.

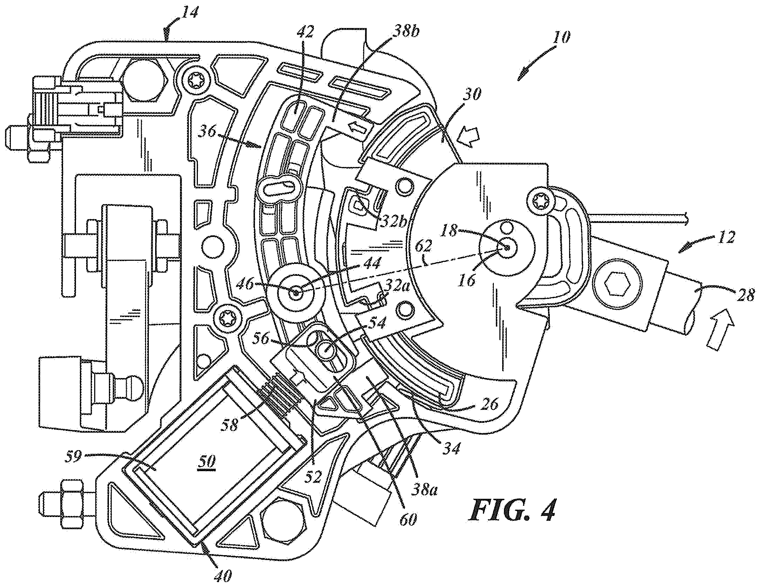

In at least some implementations, one or more control features 32a,b of the shift member are located on one side of a line or plane 62 (indicated by a broken line in FIG. 4) that intersects the shift member pivot axis 18 and the lock member pivot axis 46, and one or more control features 32a,b are on the opposite side of the plane 62, in at least some positions of the shift member 12. In an implementation with more than one control feature 32a,b the control features may each remain on one side of the plane 62 (e.g. one feature remains on one side of the plane and the other control feature remains on the other side of the plane), or one or more control features may cross the plane as the shift member is used. In at least some implementations, a single control feature (e.g. 32a) may be used to provide a shift member lockout in two positions of the shift member by crossing over the plane. Thus, the control feature 32a would be aligned with one control feature 38a of the lock member in a first position of the shift member (e.g. park) and with another control feature 38b of the lock member in a second position of the shift member (e.g. neutral). Of course, other arrangements are possible.

While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. A shifter for a vehicle transmission, comprising:
a shift member (12) movable among at least a first position corresponding to a first transmission gear and a second position corresponding to a second transmission gear;
a lock member (36) movable between a first lock position and a second lock position; and
an electrically actuated actuator (40) having a first position when not actuated and a second position when actuated, the actuator (40) is coupled to the lock member (36) to move the lock member (36) relative to the shift member (12), wherein, when the shift member (12) is in a first position and the actuator (40) is in the first position, the lock member (36) is in the first lock position wherein the lock member (36) prevents movement of the shift member (12) out of the first position, and when the shift member (12) is in a second position and the actuator (40) is in the second position, the lock member (36) is in the second lock position wherein the lock member (36) prevents movement of the shift member (12) out of the second position.

2. The shifter of claim 1 wherein the lock member (36) and the shift member (12) include control features (38a, 38b; 32a, 32b) that are engaged when the lock member (36) is in the first lock position and second lock position.

3. The shifter of claim 2 wherein the control features (38a, 38b) include at least one projection extending from one of the lock member (36) or the shift member and at least one recess (32a, 32b) formed in the other of the lock member or the shift member (12).

4. The shifter of claim 2 or 3 wherein the lock member (36) and the shift member (12) include control features (38a, 32a) selectively and releasably engageable when the shift member (12) is in the first position, and the lock member (36) and the shift member (12) also include control features (38b, 32b) selectively and releasably engageable when the shift member (12) is in the second position.

5. The shifter of claim 4 wherein the lock member (36) has two ends and is coupled to a pivot (44) between the two ends for pivoted motion relative to the shift member (12), and wherein the lock member (36) includes a first control feature (38a) between one end and the pivot (44) and a second control feature (38b) between the other end of the lock member (36) and the pivot (44), and wherein the lock member (36) is rotated about the pivot (44) in one direction to the first lock position (38a) of the lock member (36) and the lock member (36) is rotated about the pivot (44) in a second direction to the second lock position of the lock member (36).

6. The shifter of claim 2 or 3 wherein the lock member (36) includes a first control feature (38a) and a second control feature (38b) and the shift member (12) includes a control feature arranged to be aligned with the first control feature (38a) of the lock member (36) when the shift member (12) is in the first position and to be aligned with the second control feature (38b) when the shift member (12) is in the second position.

7. The shifter of claim 6 wherein the lock member (36) is coupled to a pivot (44) between the first control feature (38a) and the second control feature (38b) so that the lock member (36) is rotated in a first direction about the pivot (44) to mate the first control feature (38a) with the control feature of the shift member (12) and the lock member (36) is rotated in a second direction about the pivot (44) to mate the second control feature (38b) with the control feature of the shift member (12).

8. The shifter of any of claims 2 to 7 wherein the shift member (12) is movable to a third position corresponding to a third transmission gear, and the actuator (40) includes a third position wherein the lock member (36) is in a third position and the control features (38a, 38b; 32a, 32b) are not engaged and the shift member (12) may be moved out of the third position without interference by the lock member (36).

9. The shifter of any preceding claim wherein the shift member (12) is movable about a pivot (16) between the multiple positions of the shift member (12).

10. The shifter of any preceding claim wherein the actuator (40) is or a solenoid (50) having an armature (52) that is coupled to the lock member (36), and wherein the armature (52) is in a first position when the solenoid (50) is not actuated which corresponds to the first position of the actuator (40), and the armature (52) is moved to a second position when the solenoid (50) is actuated which corresponds to the second position of the actuator (40).

11. The shifter of claim 10 wherein the solenoid (50) includes a biasing member (58) that displaces the armature (52) when the solenoid (50) is not actuated, and wherein the armature (52) is displaced against the force of the biasing member (58) when the solenoid (50) is actuated.

12. The shifter of any of claims 1 to 11 wherein:
the shift member (12) is movable among the first position, the second position and a third position to shift the transmission among at least a park gear, a neutral gear and a drive gear;
the lock member (36) is movable between the first lock position, an intermediate position and the second lock position; and
the electrically actuated actuator (40) has a first state when not actuated and a second state when actuated and when the shift member (12) is in the third position and the actuator (40) is in the first state, the lock member (36) is in the intermediate position and movement of the shift member (12) is permitted.
